(19) Europäisches Patentamt

European Patent Office

Office européen des brevets

(11) **EP 2 034 006 B1**

(12) **EUROPEAN PATENT SPECIFICATION**

(45) Date of publication and mention
of the grant of the patent:
**04.07.2018 Bulletin 2018/27**

(51) Int Cl.:
***C11B 3/10*** *(2006.01)*   ***C01B 33/40*** *(2006.01)*

(21) Application number: **07708113.1**

(86) International application number:
**PCT/JP2007/052061**

(22) Date of filing: **31.01.2007**

(87) International publication number:
**WO 2008/001509 (03.01.2008 Gazette 2008/01)**

(54) **DECOLORING AGENT FOR OIL-AND-FAT OR MINERAL OIL**

ENTFÄRBUNGSMITTEL FÜR ÖL-UND-FETT ODER MINERALÖL

AGENT DE DÉCOLORATION POUR HUILE ET GRAISSE OU HUILE MINÉRALE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.06.2006 JP 2006177841
26.01.2007 JP 2007015807**

(43) Date of publication of application:
**11.03.2009 Bulletin 2009/11**

(73) Proprietor: **Mizusawa Industrial Chemicals Ltd.
Tokyo 103-0022 (JP)**

(72) Inventors:
• **HATANO, Masashi**
 **Tokyo; 103-0022 (JP)**
• **HAZUMA, Tetsuji**
 **Tokyo; 103-0022 (JP)**
• **SAKAO, Kazunori**
 **Tokyo; 103-0022 (JP)**
• **UENO, Tooru**
 **Tokyo; 103-0022 (JP)**

(74) Representative: **J A Kemp
14 South Square
Gray's Inn
London WC1R 5JJ (GB)**

(56) References cited:
**EP-A1- 1 120 379      JP-A- 06 340 413
JP-A- 11 157 829      JP-A- 2000 344 513
JP-A- 2002 113 359      US-A- 3 787 330
US-A1- 2003 027 950**

• **SATO T. ET AL: 'Okuno Yoto de Katsuyaku suru
Kassei Hakudo' JETI vol. 43, no. 11, 1995, pages
67 - 69, XP002946509**

**Description**

Technical Field

The present invention relates to a decoloring agent for fats and oils or mineral oils and, more specifically, to a decoloring agent comprising an activated clay.

Background Art

It has long been known that a dioctahedral smectite clay mineral exhibits decoloring properties. In Great Britain, clay minerals of this kind have also been called fuller's earth or bleaching earth.

It has also been known to use the activated clay as a decoloring agent for fats and oils or mineral oils, the activated clay having been activated by increasing the specific surfaces thereof by treating the dioctahedral smectite clay mineral with an acid. For example, a patent document 1 proposes the use of an activated clay as a decoloring agent for fats and oils or mineral oils, the activated clay being obtained by treating the dioctahedral smectite clay mineral with an acid and having a crystallite size adjusted to lie in a predetermined range.

A patent document 2, discloses an inorganic porous body obtained by treating a montmorillonite clay mineral belonging to a dioctahedral smectite clay mineral with an acid and having a sharp pore distribution a majority proportion of pores of which having pore diameters in a range of 30 to 50Å.

Further, a patent document 3 discloses a novel dry treatment method with an acid for producing an activated clay or a fine powdery silica by treating a siliceous aluminous clay containing acid-soluble basic components with an acid.

A patent document 4 describes an ion-exchange layered silicate having, in pore size distribution curves calculated from desorption isotherm by nitrogen adsorption-desorption methods, a pore diameter Dm showing a maximum peak intensity $D_{VM}$ of from 60 to 200 Å and a pore diameter $D_{m\frac{1}{2}}$ (Å) on the smaller pore size side corresponding to a $\frac{1}{2}$ peak intensity of the maximum peak intensity $D_{VM}$ which has a relation of $D_{m\frac{1}{2}}/D_m$ of at least 0.65 and less than 1, provided that the largest value is employed when there are a plurality of $D_{m\frac{1}{2}}$ values. Such a compound is provided as a catalyst component for olefin polymerization.

A patent document 5 describes activated regular-shaped clay particles forming macropores therein, preserving fine structure of the dioctahedral smectite clay minerals, and having particle diameters controlled to lie within a range in which they exhibit excellent filtering property.

Patent document 1: JP-A-11-157829
Patent document 2: JP-A-6-340413
Patent document 3: JP-B-45-11208
Patent document 4: US 2003/0027950 A1
Patent document 5: EP 1 120 379 A1

Disclosure of the Invention

After used for the decoloring treatment, the decoloring agent for fats and oils or mineral oils, that uses an activated clay, by-produces waste clay that involves a difficult disposal. It is, therefore, desired that the decoloring agent sustains decoloring property despite of being used in amounts as small as possible and that oils are contained in small amounts in the waste clay (i.e., oil retention is low). It is further required that the decoloring agent features high filtering property and enables the oils and waste clay to be quickly separated from each other by filtration.

Among the above properties, however, decoloring property and oil retention are very closely related to each other. For instance, if the decoloring property is enhanced, the oil retention becomes high, too, and oils are adsorbed and held in increased amounts by the waste clay. As a result, it is very difficult to simultaneously satisfy both the highly decoloring property and the low oil retention. For instance, the decoloring agent proposed in the above patent document 1 involves a problem in that the oil retention has not been lowered to a satisfactory degree. The inorganic porous body having a very sharp pore distribution taught in the patent document 2 has a low oil retention but its decoloring property is low, too. The activated clay obtained by the dry acid-treatment method disclosed in the patent document 3 has high decoloring property but its oil retention has not been lowered to a satisfactory degree.

It is therefore an object of the present invention to provide a decoloring agent for fats and oils or mineral oils, having excellent filtering property, high decoloring property and low oil retention.

The present inventors have conducted experiment extensively concerning decoloring property and oil retention of the activated clay, have found a new knowledge that an activated clay is obtained having high decoloring property, low oil retention and excellent filtering property when a dioctahedral smectite clay mineral is treated with an acid while adjusting the conditions for treatment with sulfuric acid, selectively treating the particle surfaces with the acid and suppressing the treatment of the interiors of the particles with the acid, and have arrived at the present invention.

According to the present invention, there is provided a decoloring agent for fats and oils or mineral oils, comprising an activated clay obtainable by treating a dioctahedral smectite clay mineral with an acid, wherein the activated clay has an average particle diameter ($D_{50}$) of 20 to 30 $\mu$m calculated as volume relying upon a laser diffraction scattering method and contains fine particles of not larger than 5 $\mu$m in an amount of not larger than 15% by volume, has a bulk density in a range of 0.60 to 0.70 g/cc, has a pore volume at pore diameters of 17 to 3,000 Å of 0.35 to 0.40 cc/g as measured relying upon the nitrogen adsorption method, and has a ratio of the bulk density and the pore volume (bulk density/pore volume) in a range of 1.55 to 1.95.

In the decoloring agent of the present invention, it is desired that the activated clay has a BET specific surface area of 200 to 300 m$^2$/g.

According to the present invention, there is further provided a method (hereinafter referred to as wet method) of producing a decoloring agent of the invention which method comprises:

pulverizing and classifying a dioctahedral smectite clay mineral to prepare a powder thereof having an average particle diameter ($D_{50}$) in a range of 20 to 30 $\mu$m calculated as volume relying upon a laser diffraction scattering method;

treating the powder with an acid by using an aqueous solution of sulfuric acid of a concentration of 35 to 45% by weight, by adding the powder to the aqueous solution of sulfuric acid, and heating the mixture thereof at a temperature of not lower than 85°C wherein the treatment with acid is conducted for a time of 1 to 3 hours; and

washing the obtained acid-treated product followed by drying.

According to the present invention, there is further provided a method (hereinafter referred to as semi-dry method) of producing a decoloring agent of the invention, which method comprises:

pulverizing and classifying a dioctahedral smectite clay mineral to prepare a powder thereof having an average particle diameter ($D_{50}$) in a range of 20 to 30 $\mu$m calculated as volume relying upon a laser diffraction scattering method;

dipping the powder in an aqueous solution of sulfuric acid of a concentration of 30 to 45% by weight, so that the powder is impregnated with the aqueous solution of sulfuric acid;

conducting the filtering to obtain a filtered cake containing sulfuric acid and water;

heating the filtered cake at a temperature of 80 to 150°C in a state of holding water therein to thereby conduct an acid-treatment; and

washing the obtained acid-treated product followed by drying.

In the production method of the present invention based on the above wet method and the semi-dry method, it is desired to adjust the particle size of the powder so as to contain fine particles of not larger than 5 $\mu$m in an amount of not larger than 15% by volume prior to being treated with the acid or after having been treated with the acid.

The decoloring agent of the invention comprises an activated clay which is obtainable by using a starting powder (dioctahedral smectite clay mineral powder) having adjusted grain sizes, by adjusting the conditions for treatment with an acid which is a sulfuric acid and by conducting the treatment with the acid relying upon the wet method or the semi-dry method. Therefore, the particle surfaces are selectively treated with the acid and the interiors of the particles are suppressed from being treated with the acid. The treatment with the acid causes an increase in the pore volume and a decrease in the bulk density. According to the present invention, however, the treatment with the acid is blocked by the surfaces of the particles, and the interiors of the particles are suppressed from being treated with the acid. Therefore, the bulk density lies in a relatively large range of 0.60 to 0.70 g/cc, the pore volume at pore diameters of 17 to 3,000 Å is in a range of 0.35 to 0.40 cc/g as measured relying upon the nitrogen adsorption method, while the ratio of the bulk density and the pore volume (bulk density/pore volume) is in a range of 1.55 to 1.95. For example, when the particles are homogeneously treated with the acid up to the interiors thereof, the pore volume increases and the bulk density decreases causing the bulk density/pore volume ratio to become strikingly smaller than the above range. Further, when the treatment with the acid has not been effectively conducted, the pore volume does not increase and the bulk density does not decrease. Therefore, the bulk density/pore volume ratio becomes larger than the above range.

As will be understood from the experimental results of Examples appearing later, the activated clay of the invention having the above-mentioned properties exhibits excellent decoloring property, low oil retention and excellent filtering property. That is, in the present invention, pores formed by the treatment with the acid are selectively distributed in the surface portions of the particles, and pores in the surface portions of the particles highly adsorb coloring matters such as chlorophyll. Pores, on the other hand, are formed in suppressed amounts inside the particles avoiding the adsorption of oils, i.e., preventing the oil retention from increasing. As a result, the decoloring agent of the present invention maintains excellent decoloring property while maintaining low oil retention.

Further, the activated clay of the invention produced as described above.contains fine particles of not larger than 5 $\mu$ m in an amount suppressed to be not larger than 15% by volume, and exhibits excellent filtering property and low oil retention.

Brief Description of the Drawing

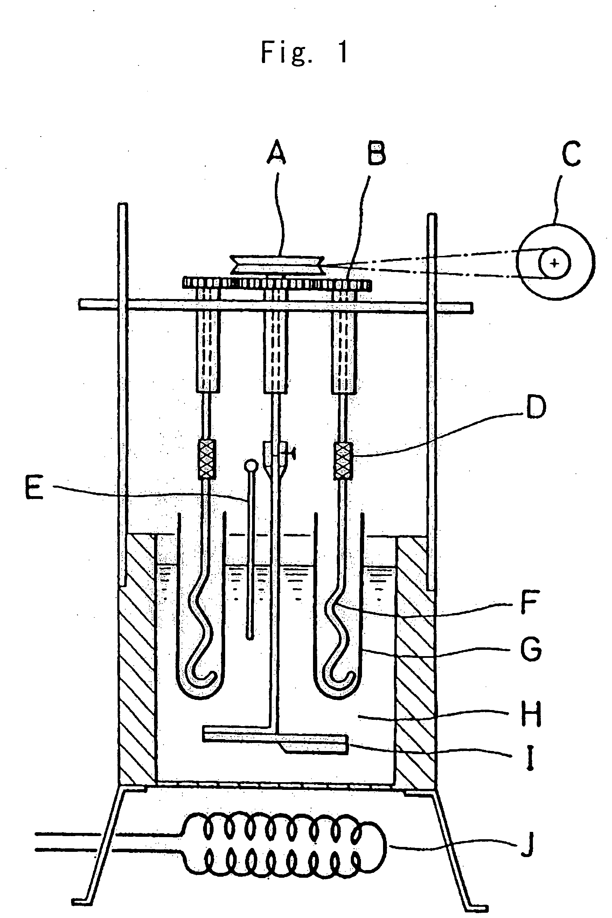

Fig. 1 is a sectional view of a decoloring testing machine.

Best Mode for Carrying Out the Invention

(Production of Activated Clay)

The activated clay used in the invention as a decoloring agent is a dioctahedral smectite clay mineral which is pulverized and classified to obtain a powder thereof having a predetermined particle size. The powder is treated with an acid under predetermined conditions to produce the activated clay.

It is considered that the dioctahedral smectite clay mineral used as the starting clay has stemmed from the volcanic rock or the lava that was denaturated under the influence of sea water, comprises an $SiO_4$ tetrahedral layer/$AlO_6$ octahedral layer/$SiO_4$ tetrahedral layer, has a three-layer structure as a basic structure (unit layers) in which the tetrahedral layer and the octahedral layer are partly and isomorphously substituted with metals of different kinds, and in which cations such as Ca, K, Na, etc. as well as hydrogen ions and water molecules coordinated therein are present among the laminated layers of the three-layer structure. Further, Al in the octahedral layer of the basic three-layer structure is partly substituted by Mg and $Fe^{(II)}$, and Si in the tetrahedral layers is partly substituted by Al. Therefore, the crystal lattice has a negative electric charge which is neutralized with metallic cations and hydrogen ions present among the basic layers. Examples of the smectite clay include acidic clay, bentonite and fuller's earth exhibiting different properties depending upon the kinds and amounts of metallic cations and the amounts of hydrogen ions present among the metal layers. For example, the bentonite contains Na ions in large amounts among the basic layers, and its dispersion suspended in water exhibits a high pH which is, usually, on the high alkali side, exhibits highly swelling property for water and is, further, gelled and solidified. The acidic clay, on the other hand, contains hydrogen ions in large amounts among the basic layers and, therefore, its dispersion suspended in water exhibits a low pH which is, usually, on the acidic side, and exhibits swelling property for water. As compared to the bentonite, however, the swelling property is low and gelation does not take place.

There is no particular limitation on the dioctahedral smectite clay used in the present invention, and any one of those of the above-mentioned kinds can be used. The starting clay, in general, has the following composition calculated as oxides though the composition differs depending upon the components of the clay, area of production and the place of deposit (working face) even in the same area of production.

| | |
|---|---|
| $SiO_2$: | 50 to 70% by weight |
| $Al_2O_2$: | 14 to 25% by weight |
| $Fe_2O_3$: | 2 to 20% by weight |
| MgO: | 3 to 7% by weight |
| CaO: | 0.1 to 3% by weight |
| $Na_2O$: | 0.1 to 3% by weight |
| $K_2O$: | 0.1 to 3% by weight |
| Other oxides ($TiO_2$, etc.): | 1% by weight of less |
| Ig-loss (1050°C): | 5 to 10% by weight |

In the present invention, the dioctahedral smectite clay ore is, as required, subjected to the refining operation such as separation into stones and sand, ore dressing by buoyancy, ore dressing by magnetic force, hydraulic elutriation or air elutriation and is, thereafter, treated with an acid. Prior to the treatment with the acid, however, it is necessary to pulverize the dioctahedral smectite clay ore into a powder thereof by adjusting the particle size so as to possess an average particle diameter ($D_{50}$) of 20 to 30 $\mu$ m calculated as the volume. It is further desired that the powder is adjusted for its particle size so that the amount of coarse particles having particle diameters of not smaller than 104 $\mu$ m is not larger than 5% by volume. That is, upon subjecting the fine powder to the treatment with the acid, the surface portions of particles are selectively treated with the acid and are activated. However, the particles are not treated with the acid up to the interiors thereof, and it is made possible to obtain particles having properties that will be described later. For example, when coarse particles having an average particle diameter which is larger than the above range are treated with the acid, particles are formed in large amounts without quite being treated with the acid after the acid-treated product is finely pulverized despite the surface portions are selectively treated with the acid. As a result, desired properties such as pore volume, etc. are not obtained, and decoloring property is low.

In the present invention, the particle size of the starting clay is measured by the laser diffraction scattering method by suspending and dispersing the starting clay in a non-aqueous dispersion medium such as ethanol. Further, the grain size is adjusted by pulverizing the starting clay, followed by fine pulverization using a ball mill or the like and classification by using a sieve.

The powder of the starting clay can be further adjusted for its particle size so that the content of fine particles having particle diameters of not larger than 5 $\mu$ m is not larger than 15% by volume. That is, upon adjusting the amount of fine particles to be not larger than a predetermined amount, the obtained acid-treated product becomes free of fine components avoiding a drop in the filtering property and, further, offering an advantage of lowering the oil retention. The fine particles can also be removed after the treatment with the acid that will be described below.

In the present invention, the powder of the starting clay of which the particle size is adjusted is subjected to the treatment with the acid. Here, the treatment with the acid is conducted by either the wet method or the semi-dry method described below.

(1) Wet Method.

The wet method uses an aqueous solution of sulfuric acid of a concentration of 35 to 45% by weight and, preferably, 37 to 43% by weight, and throws the powder of the starting clay into the aqueous solution of sulfuric acid to conduct the treatment with the acid. So far, the treatment with the acid was conducted by using sulfuric acid of a concentration lower than the above range. When the sulfuric acid of a low concentration is used, however, the time for treatment with the acid is lengthened. When the starting clay in the form of a powder is treated with the acid as in the present invention, therefore, the sulfuric acid infiltrates into the interiors of particles making it difficult to selectively activate the surface portions only of the particles by the treatment with the acid and to obtain particles having properties that will be described later. When the sulfuric acid of a high concentration in excess of 45% by weight is used, on the other hand, the layer structure specific to the starting clay is destroyed, or load is exerted on the apparatus causing the life of the apparatus to be shortened.

According to the wet method which uses the sulfuric acid of a relatively high concentration as described above, it is also important to conduct the treatment at a temperature of not lower than 85°C and, particularly, at 85 to 95°C. That is, when the treatment with the acid is conducted at a low temperature, the time is lengthened until predetermined pores are formed and are activated. As a result, the sulfuric acid infiltrates into the interiors of the particles making it difficult to obtain activated particles having such properties as bulk density, pore volume, bulk density/pore volume ratio that will be described later. When the temperature is unnecessarily elevated, on the other hand, the activation takes place sharply making it difficult to limit the activation to the surfaces only of the particles. It is therefore desired to set the upper limit of the temperature to be 95°C as described above.

According to the present invention as described already, the treatment with the acid must be limited to the surfaces only of the particles, so that the acid will not infiltrate into the interiors of particles and will not activate the interiors of particles. Therefore, the treatment with the acid is conducted for only a very short period of time. The time for the treatment with the acid varies depending upon the amount of the starting clay powder to be treated, the concentration of acid and the temperature of treatment with acid, and is 1 to 3 hours. It is desired to measure the properties of the activated particles that are obtained for each of the conditions and set the treating time in advance so that particles that will be described later are obtained.

The treatment with the acid is conducted by filling a treating vessel with an aqueous solution of sulfuric acid of a predetermined concentration, throwing the starting clay powder therein, and stirring the mixture at a predetermined temperature. The treatment with the acid ends by, for example, stopping the heating and feeding water of room temperature in large amounts into the treating apparatus to wash it.

(2) Semi-Dry Method.

The semi-dry method of the invention conducts the treatment with the acid by using an aqueous solution of sulfuric acid of a concentration of 30 to 45% by weight and, particularly, 30 to 40% by weight, i.e., conducts the pretreatments of impregnation and filtration and, thereafter, treats the filtered cake with the acid. That is, this method uses the sulfuric acid of a minimum required amount to conduct the treatment with the sulfuric acid infiltrated in the gaps among the particles of the filtered cake (partly infiltrated in the pores possessed by the particles) to selectively treat the surfaces of particles with the acid while suppressing the treatment of the interiors of particles with the acid.

When the sulfuric acid of a concentration in excess of 45% by weight is used in the semi-dry method, in particular, the sulfuric acid does not uniformly infiltrate into the interiors of particles and, therefore, the bulk density/pore volume ratio of the invention is not obtained and decoloring property decreases. Further, when the concentration of the sulfuric acid aqueous solution is not higher than 30% by weight, the amount of sulfuric acid is not sufficient in the gaps among the particles of the filtered cake after the dipping and filtration that will be described later. As a result, the surface portions of particles are not effectively treated with the acid, and decoloring property decreases, too.

According to this method, further, when the starting powder contains water in small amounts, it is desired to conduct the hygroscopic treatment prior to the dipping to adjust the water content of the powder to be not less than 10% by weight. This expands the gap among the layers in the basic layer structure of smectite, and the sulfuric acid homogeneously infiltrates into the interiors of particles of the powder. Though there is no particular limitation, the hygroscopic treatment is conducted by, for example, leaving the powder to stand in the open air at room temperature for a suitable period of time (usually, not less than 10 hours). The time can be shortened when the powder is left to stand in an atmosphere of a high relative humidity, as a matter of course.

The starting powder of which the amount of water is adjusted as described above is dipped in the aqueous solution of sulfuric acid of a predetermined concentration described above, and is filtered in a customary manner to obtain a filtered cake impregnated with both sulfuric acid and water. It is desired that the dipping is effected at a temperature of not higher than 40°C (usually at room temperature). When the temperature is higher than the above temperature, the treatment proceeds in this stage with large amounts of sulfuric acid up to the interiors of particles making it difficult to obtain the activated clay having properties that will be described later and permitting an increase in the oil retention.

The dipping is conducted until the sulfuric acid and water infiltrate in sufficient amounts into the gaps among the particles and into the pores in the particles, and is, usually, conducted for not less than one hour. In conducting the dipping, ions such as Na ions possessed by the smectite particles are exchanged but the treatment with the acid is not effected to such an extent as to elute out the metal components constituting the three-layer structure. As required, further, the filtering may be conducted under a reduced pressure or under an elevated pressure. It is a little different by concentration of the sulfuric acid aqueous solution and a kind of starting clay (for example, the place of origin), however, through the dipping and filtering, the impregnated amount of the sulfuric acid aqueous solution (sulfuric acid + water) becomes about 70 to 95 ml per 100 g of the starting clay powder(dry powder).

In the present invention, the thus filtered cake is treated with the acid. The treatment with the acid is conducted being heated at 80 to 150°C and, desirably, at 85 to 150°C in a state where water is held in the gaps among the particles. That is, due to the solid-liquid reaction in the state of holding the water, the treatment is conducted with the acid as the sulfuric acid gradually infiltrates into the interiors of particles through the surfaces thereof. Here, when heated in the state of not holding water, the sulfuric acid does not migrate into the interiors of particles through the surfaces thereof. As a result, the treatment with the acid is not sufficiently conducted making it difficult to obtain the activated clay having properties that will be described below and lowering, for example, the decoloring property. When heated in the state of holding water, the treatment with the acid proceeds to the interiors of particles. In this case, however, the amount of sulfuric acid is limited in the gaps among the particles (partly in the pores). Therefore, the treatment with the acid is limited to the surface portions only of particles and is effectively suppressed from proceeding into the interiors of particles.

Concretely speaking in the present invention, the heating in the state of holding water is effected by heating the filtered cake at a predetermined temperature in a closed container such as an oven or an autoclave. When heated in an open system, however, water volatilizes accompanying the heating (becomes equal to drying in this case) and, as a result, the treatment with the acid is not effected to a sufficient degree causing the decoloring property to be lowered as described above. The heating may be effected under a refluxing condition. In this case, however, the liquefied water may come in contact again with the superheated particles and may not effectively migrate into gaps among the particles eventually establishing a state same as the heating in the state of not holding water and lowering the decoloring property, which is not desirable.

When the heating temperature is higher than the above range, a burden is exerted on the apparatus and, besides, a special countermeasure is necessary for preventing the volatilization of water. When the heating temperature is lower than the above range, an extended period of time is required for the activation which is industrially very disadvantageous.

In the present invention, the treatment with the acid is conducted until the sulfuric acid present in the gaps among the particles of the cake is completely consumed, usually, for about 1 to about 20 hours. The time of the treatment with the acid is usually set by conducting experiment on a laboratory scale in advance, measuring the unreacted sulfuric acid by titration and finding the time when the sulfuric acid becomes zero.

After the treatment with the acid, as required, the filtered cake is washed by being suspended and dispersed in a dilute acid followed by washing with water, filtering and drying in order to obtain the desired activated clay of the present invention. In this case, the activated clay that is obtained is in the form of a cake which, however, can be easily digested to obtain a powder having the particle size distribution described above.

When mass-producing on an industrial scale, it is an essential requirement to stop (i.e., to cool) the treatment with the acid at a predetermined timing in the case of the wet method. In the case of the semi-dry method, the treatment with the acid automatically ends at a moment when the sulfuric acid present in the gaps among the particles is all consumed leaving no problem from the standpoint of stopping the treatment with the acid. Therefore, the semi-dry method is industrially very advantageous from the standpoint of obtaining the activated clay having stable properties.

In the present invention, after the treatment with the acid by the wet method or the semi-dry method, the activated clay that is obtained is left to stand still in a state of being suspended and dispersed in water, and is subjected to the hydraulic elutriation to remove fine particles so that the content of fine particles of particle sizes of not larger than 5 $\mu$ m is not larger than 15% by volume. The fine particles can be removed prior to the treatment with the acid. After the treatment with the acid, however, the fine particles can be easily removed by the hydraulic elutriation (fine particles float and can be easily removed by the settling separation) which is very advantageous from the standpoint of productivity. Before the treatment with the acid, the starting clay swells and it is not allowed to utilize the hydraulic elutriation. After the treatment with the acid, however, the activated clay that is obtained does not swell with water making it possible to utilize the hydraulic elutriation.

The activated clay obtained as described above is, usually, dried at a temperature of 80 to 500°C and, particularly, 100 to 300°C for 0.5 to 10 hours and, particularly, about 0.7 to about 5 hours like the conventional activated clays. Through the heating, the concentration of silanol groups decreases on the surfaces, hygroscopic property and swelling property decrease, and the filtering property can be further heightened.

(Activated Clay)

Like the starting clay powder, the powder of the activated clay obtained by the above treatment with the acid has an average particle diameter ($D_{50}$) of 20 to 30 $\mu$ m calculated as the volume and contains fine particles of not larger than 5 $\mu$ m in an amount of not larger than 15% by volume and, more preferably, contains coarse particles of particle diameters of not smaller than 104 $\mu$ m in an amount of not larger than 5% by volume. The particle size distribution can be measured relying upon the laser diffraction scattering method by suspending and dispersing the activated clay powder in water. That is, the activated clay that is obtained does not swell and can be measured by using water as a dispersion medium.

The activated clay having the above particle size distribution is devoid of fine particles and can be filtered very excellently.

Further, the activated clay of the invention obtained through the above treatment with the acid, usually, has the following chemical composition calculated as oxides.

| | |
|---|---|
| $SiO_2$: | 60 to 80% by weight |
| $Al_2O_2$: | 8 to 13% by weight |
| $Fe_2O_3$: | 1 to 10% by weight |
| MgO: | 1 to 3% by weight |
| CaO: | 0.1 to 2% by weight |
| $Na_2O$: | 0.1 to 1% by weight |
| $K_2O$: | 0.1 to 1% by weight |
| Other oxides ($TiO_2$, etc.): | 1% by weight of less |
| Ig-loss (1050°C): | 4 to 8% by weight |

Further, the activated clay has a pore volume at pore diameters of 17 to 3,000 Å in a range of 0.35 to 0.40 cc/g as measured relying upon the nitrogen adsorption method, has a bulk density of as large as 0.60 to 0.70 g/cc and, particularly, 0.63 to 0.67 g/cc. Further, pores are not formed inside the particles but are distributed being limited on the surface portions only of the particles. Therefore, the activated clay has a bulk density/pore volume ratio in a range of 1.55 to 1.95 and, particularly, in a range of 1.60 to 1.90. That is, when the treatment with the acid is effected up to the interiors of the particles and pores are formed in the particles, the bulk density/pore volume ratio becomes lower than the above range. When the acid treatment is not effectively conducted and pores are not formed in sufficient amounts in the surface portions of the particles, the bulk density/pore volume ratio becomes larger than the above range.

The activated clay of the invention having the above properties exhibit excellent filtering property as well as excellent decoloring property featuring low oil retention, which are excellent properties required for the decoloring agent.

That is, a coloring matter such as chlorophyll is present in a state in which the molecules thereof are associated in the fats and oils, and is held being adsorbed in relatively large pores in the surface portions of the particles formed by the treatment with the acid. In the present invention, the pores are selectively formed in the surface portions of the particles and excellent decoloring property is exhibited as demonstrated in Examples appearing later.

In the activated clay of the invention, further, pores are distributed being limited to the surface portions only of the particles but are present little inside the particles. As a result, the activated clay exhibits considerably low oil retention as will be demonstrated in Examples appearing later. For example, the activated clay (Comparative Example 4) described in the above patent document 1 has pores formed up to the interiors of particles and, therefore, has a small bulk density, a large pore volume at the pore diameters of 17 to 3000Å, and has a very large oil retention.

In addition to having the above particle size distribution and pore volume, the activated clay of the invention further has a relatively large BET specific surface area, usually, in a range of 200 to 300 m$^2$/g. This large specific surface area, too, contributes to obtaining excellent decoloring property.

As will be understood from the foregoing description, the above activated clay has excellent decoloring property and low oil retention, and is used as a decoloring agent for fats and oils or mineral oils and, particularly, as a decoloring agent for fats and oils.

As the fats and oils to be subjected to the decoloring treatment, there can be exemplified at least any one of fats and oils of plants, fats and oils of animals and mineral oils. The starting oils and fats widely exist in the natural kingdom of animals and plants, and chiefly comprise esters of fatty acid and glycerin. Examples include fats and oils of plants like safflower oil, soybean oil, rape oil, palm oil, palm kernel oil, cotton seed oil, coconut oil, rice bran oil, sesame oil, castor oil, linseed oil, olive oil, tung oil, tsubaki oil, peanut oil, kapok oil, cacao oil, Japan wax, sunflower oil and corn oil, as well as fish oils like sardine oil, herring oil, squid oil and saury oil, fats and oils of animals like liver oil, whale oil, beef tallow, buttermilk tallow, horse fat, hog fat and mutton tallow, which may be used alone or in combination.

As the mineral oils, on the other hand, there can be exemplified various lubricating oils such as spindle oil, refrigerator oil, dynamo oil, turbine oil, machine oil, lubricating oil for marine internal combustion engines, lubricating oil for gasoline engines, lubricating oil for diesel engines, cylinder oil, marine engine oil, gear oil, cutting oil, insulating oil, automatic transmission oil, compressor oil, hydraulic operation oil and rolling oil.

To conduct the decoloring treatment, the powder of activated clay having the above particle size distribution is added to fats and oils or mineral oils that are to be decolored, and the mixture is homogeneously stirred so that the color components or impurity components contained in fats and oils or in mineral oils are adsorbed by the clay particles. The clay that is separated after the decoloring treatment holds fats and oils or mineral oils in amounts close to the amounts which the clay can absorb. Here, the present invention decreases the oil retention of the clay.

Fats and oils or mineral oils are decolored under known conditions. For example, the decoloring agent is added in an amount of not more than 5% on the weight basis per fats and oils or mineral oils, and the composition of the two is stirred at a temperature of 90 to 130°C for 5 to 30 minutes to complete the decoloring treatment.

The mixture after the decoloring treatment is fed to any filtering machine, i.e., a reduced-pressure or elevated-pressure filtering machine such as filter press, belt filter, Oliver filter, American filter or centrifugal filter, so as to be separated into decolored fats and oils or mineral oils and the so-called waste clay which is the used decoloring agent. By using the decoloring agent of the invention, the waste clay has a decreased oil retention.

EXAMPLES

The invention will now be described by way of Working Examples in which measurements were taken in a manner as described below.

(1) Average particle diameter (D$_{50}$) and particle content.

Measured according to the laser diffraction scattering method by using the Mastersizer 2000 manufactured by Malvern Co. The starting clay used ethanol as a solvent, while the products of the invention (Examples) and the decoloring agents of Comparative examples used water as a solvent to take measurements.

(2) BET specific surface area.

Measured according to the nitrogen adsorption method by using the Tri Star 3000 manufactured by Micrometrics Co., and analyzed according to the BET method.

(3) Pore volume.

Measured according to the nitrogen adsorption method by using the Tri Star 3000 manufactured by Micrometrics Co., and found over the pore diameters of 17 to 3000 Å from the desorption data relying on the BJH method.

(4) Bulk density.

Measured in compliance with the JIS K 6220-17.7: 2001 and was calculated as the water content according to the following formula.

$$Bulk\ density\ (g/cc) = G(1 - (M/100))$$

G: Measured bulk density (g/cc)
M: Water content (%) of the sample dried at 110°C

(5) Oil-absorbing amount.

Measured by using the samples dried in advance at 110°C in compliance with the JIS K 5101-13-2: 2004.

(6) Decoloring testing method.

Properties of the decoloring agents are tested by using the decoloring testing machine shown in Fig. 1. For its details, refer to the journal "Chemistry and Industries 4, 126, 1951". The decoloring testing machine permits up to eight large test tubes (volume of 200 ml) made of a hard glass to be set to the oil bath. Each test tube contains a corrugated stirrer rod having a rounded lower end which is in contact with the bottom of the test tube at all times being adjusted by using rubber tubes. Eight stirrer rods rotate due to pinions divided from the central master gear and are maintained at an equal rotational speed. Stirrer vanes for stirring the oil bath are hanging down from the central master gear and work to maintain the temperature uniform in the oil bath. Decoloring tests can be conducted in any number of up to a maximum of eight. Deoxidized rape oil was introduced into the test tubes each in an amount of 50 g, and the decoloring agents were added each in an amount of 0.5 g (1% with respect to the oil) and were mixed well using stirrer rods for decoloring testing. The test tubes were set to the decoloring testing machine maintained at 110°C, stirred for 20 minutes and were, thereafter, taken out from the decoloring testing machine. Mixed slurries of oils and decoloring agents were filtered to obtain decolored oils. The decolored oils were measured for their white ray transmission factors (relative values of when the transmission factor of distilled water is regarded to be 100%) by using a photoelectric colorimeter, Model 2C, manufactured by Hirama Rika-Kenkyujo Co. , and the decoloring agents were evaluated for their decoloring properties relying upon their numerical values. The higher the values of transmission factors, the higher the decoloring properties of the decoloring agents that are used.

(7) Measurement of filtering rate and oil retention.

150 g $\pm$ 0.1 g of the soybean oil was weighed and introduced into a 300-ml beaker. The beaker was placed on a heated magnetic stirrer maintained at 95 $\pm$ 3°C to stir the oil. After the oil was heated at 95 $\pm$ 3°C, 15 g $\pm$ 0.01 g of the sample was added thereto and was stirred for 15 minutes while maintaining a temperature at 95 $\pm$ 3°C. A filtering paper was set to the Buchner funnel made of a stainless steel that had been heated in advance, and a switch of a vacuum pump was turned on. The mixture of the sample and the oil after having been stirred was poured into the funnel, and a stop watch was immediately started. The vacuum degree (pressure differential) must be maintained to be 300 mmHg and the oil temperature must be maintained at 95 $\pm$ 3°C during the filtering. The stop watch was stopped at a moment when the whole surface of the filtered cake was seen, and the filtering time was regarded to be the filtering rate.

After the filtering rate was measured, the filtering was continued until a time interval between the drips of oil droplets from the filtered cake became longer than 60 seconds. After the interval between the drips has exceeded 60 seconds, the total amount of the filtered cake and the filtering paper was measured, and the oil retention was calculated according to the following formula,

$$A(\%) = [100(W - W_0) - 15(100 - M)]/(W - W_0)$$

A: oil retention
W: filtered cake + filtering paper (g)
$W_0$: filtering paper (g)
M: water content (%) of sample dried at 110°C

(Example 1)

The dioctahedral smectite clay mineral produced in Tainai city in Niigata prefecture, Japan, was used as a starting material, and was coarsely pulverized, mixed, kneaded and granulated into particles 5 mm in diameter. After dried at 110°C, the particles were pulverized in a ball mill and were classified by using a sieve and air elutriation in combination. The obtained starting clay powder possessed an average particle diameter ($D_{50}$) of 26.5 $\mu$ m as measured

by using ethanol as a solvent, and contained fine particles of not larger than 5 $\mu$m in an amount of 12.5% by volume and coarse particles of not smaller than 104 $\mu$m in an amount of 3.2% by volume. 800 Milliliters of an aqueous solution containing 40% by weight of sulfuric acid was weighed and introduced into a beaker, 360 g of the starting clay powder was dispersed therein with stirring and was treated with the acid on a heater at 90°C for 2 hours with stirring. After treated with the acid, water was added to the acid-treated product to wash it by the decantation method followed by filtering. The filtered cake was dried at 110°C to obtain an activated clay powder which was, then, measured for its physical properties to obtain results as shown in Table 1.

(Example 2)

An activated clay powder was obtained in the same manner as in Example 1 but using an aqueous solution containing 45% by weight of sulfuric acid instead of using the aqueous solution containing 40% by weight of sulfuric acid used in Example 1, and was measured for its physical properties to obtain results as shown in Table 1.

(Example 3)

An activated clay powder was obtained in the same manner as in Example 1 but using an aqueous solution containing 35% by weight of sulfuric acid instead of using the aqueous solution containing 40% by weight of sulfuric acid used in Example 1 and conducting the treatment with the acid at 90°C for 3 hours. The activated clay powder was measured for its physical properties to obtain results as shown in Table 1.

(Example 4)

The same dioctahedral smectite clay mineral as that of Example 1 was coarsely pulverized, mixed, kneaded and granulated into particles 5 mm in diameter. After dried at 110°C, the particles were pulverized in a ball mill and from which coarse particles only were removed by using a sieve. The obtained starting clay powder possessed an average particle diameter ($D_{50}$) of 21.3 $\mu$m as measured by using ethanol as a solvent, and contained fine particles of not larger than 5 $\mu$m in an amount of 16.4% by volume and coarse particles of not smaller than 104 $\mu$m in an amount of 2.0% by volume. 800 Milliliters of an aqueous solution containing 40% by weight of sulfuric acid was weighed and introduced into a beaker, 360 g of the starting clay powder was dispersed therein with stirring and was treated with the acid on a heater at 90°C for 2 hours with stirring. After treated with the acid, water was added to the acid-treated product and the mixture was left to stand still and from which fine particles were removed by hydraulic elutriation. The acid-treated product from which the fine particles have been removed was washed by the decantation method followed by filtering. The filtered cake was dried at 110°C to obtain an activated clay powder which was, then, measured for its physical properties to obtain results as shown in Table 1.

(Example 5)

The same dioctahedral smectite clay mineral as that of Example 1 was coarsely pulverized, mixed, kneaded and granulated into particles 5 mm in diameter. After dried at 110°C, the particles were pulverized in a ball mill and were classified by using the sieve and air elutriation in combination. The obtained starting clay powder possessed an average particle diameter ($D_{50}$) of 26.9 $\mu$m as measured by using ethanol as a solvent, and contained fine particles of not larger than 5 $\mu$m in an amount of 10.1% by volume, coarse particles of not smaller than 104 $\mu$m in an amount of 0.8% by volume and water in an amount of 10.5%. 1200 Grams of an aqueous solution containing 35% by weight of sulfuric acid was introduced into a beaker, and 360 g of the starting clay powder was suspended and dispersed therein. After one hour has passed, the suspension was filtered, the filtered cake was introduced into a glass container, a cover was loosely fitted thereto, and the treatment with the acid was conducted in an oven maintained at 120°C for 2 hours. After treated with the acid, 1% sulfuric acid was added to the acid-treated product to suspend and disperse it, and the acid-treated product was washed by the decantation method. Thereafter, the acid-treated product was washed with water and was filtered. The filtered cake was dried at 110°C to obtain an activated clay powder which was, then, measured for its physical properties to obtain results as shown in Table 1.

(Example 6)

An activated clay powder was obtained in the same manner as in Example 5 but conducting the treatment with the acid in an autoclave maintained at 120°C for 2 hours instead of using the oven maintained at 120°C used in Example 5. The activated clay powder was measured for its properties to obtain results as shown in Table 1.

(Example 7)

An activated clay powder was obtained in the same manner as in Example 5 but conducting the treatment with the acid in the oven maintained at 150°C for 90 minutes instead of using the oven maintained at 120°C used in Example 5. The activated clay powder was measured for its properties to obtain results as shown in Table 1.

(Example 8)

An activated clay powder was obtained in the same manner as in Example 5 but conducting the treatment with the acid in the oven maintained at 85°C for 20 hours instead of using the oven maintained at 120°C used in Example 5. The activated clay powder was measured for its properties to obtain results as shown in Table 1.

(Example 9)

An activated clay powder was obtained in the same manner as in Example 5 but using an aqueous solution containing 45% by weight of sulfuric acid and conducting the treatment with the acid in the oven maintained at 85°C for 20 hours instead of using the aqueous solution containing 35% by weight of sulfuric acid used in Example 5. The activated clay powder was measured for its properties to obtain results as shown in Table 1.

(Comparative Example 1)

An activated clay powder was obtained in the same manner as in Example 1 but using 800 ml of an aqueous solution containing 25% by weight of sulfuric acid instead of using the aqueous solution containing 40% by weight of sulfuric acid used in Example 1. The activated clay powder was measured for its properties to obtain results as shown in Table 2.

(Comparative Example 2)

The same dioctahedral smectite clay mineral as that of Example 1 was dispersed in water and from which coarse particles were removed by hydraulic elutriation, followed by filtration and drying at 110°C. 920 Grams of an aqueous solution containing 15% by weight of sulfuric acid was introduced into a beaker, 360 g of the dry clay powder was added thereto and was treated with the acid on a heater at 70°C for 12 hours with stirring. After treated with the acid, water was added to the acid-treated product which was, then, washed by the decantation method followed by filtering. The filtered cake was dried at 110°C, pulverized and classified to obtain an activated clay powder which was, then, measured for its physical properties to obtain results as shown in Table 2.

(Comparative Example 3)

An activated clay powder was obtained in the same manner as in Comparative Example 2 but conducting the treatment with the acid at 70°C for 9 hours by using an aqueous solution containing 35% by weight of sulfuric acid instead of using the aqueous solution containing 15% by weight of sulfuric acid used in Comparative Example 2. The activated clay powder was measured for its properties to obtain results as shown in Table 2.

(Comparative Example 4)

The same dioctahedral smectite clay mineral as that of Example 1 was coarsely pulverized, mixed, kneaded and granulated into particles 5 mm in diameter. 1500 Grams of the particles were filled in a treating vessel and in which 2000 ml of an aqueous solution containing 30% by weight of sulfuric acid was circulated to conduct the treatment with the acid. The treating temperature at that moment was 90°C and the treating time was 5 hours. After treated with the acid, water was circulated through the acid-treated product which was, then, washed with water and dried at 110°C, pulverized and classified to obtain an activated clay powder which was, then, measured for its physical properties to obtain results as shown in Table 2.

(Comparative Example 5)

The same dioctahedral smectite clay mineral as that of Example 1 was coarsely pulverized and was used as a starting clay. 138 Grams of 98% sulfuric acid was added and mixed to 600 grams of the starting clay containing 36% of water, and the mixture was sufficiently kneaded and granulated into particles of 5 mm in diameter. The particles were introduced into a glass container, a cover was loosely fitted thereto, and the treatment with the acid was conducted in an oven maintained at 120°C for 2 hours. After treated with the acid, 1% sulfuric acid was added to the acid-treated product to extract soluble salts (in this case, the particles were not suspended or dispersed). Thereafter, the acid-treated product was washed with water, dried at 110°C, pulverized and classified to obtain an activated clay powder which was, then, measured for its physical properties to obtain results as shown in Table 2.

(Comparative Example 6)

An activated clay powder was obtained in the same manner as in Example 5 but using an aqueous solution containing 25% by weight of sulfuric acid instead of using the aqueous solution containing 35% by weight of sulfuric acid used in Example 5. The activated clay powder was measured for its physical properties to obtain results as shown in Table 2.

Table 1

|  | Example 1 | Example 2 | Example 3 | Example 4 | Example 5 |
|---|---|---|---|---|---|
| Particle size distribution<br>Ave. ptcl. dia. ($D_{50}$, μm)<br>5μm or smaller (vol. %) | 26.9<br>12.9 | 28.3<br>11.9 | 27.2<br>12.6 | 23.5<br>14.1 | 26.8<br>9.8 |
| Bulk density (g/cc) | 0.654 | 0.664 | 0.653 | 0.645 | 0.647 |
| Pore vol. (cc/g) | 0.380 | 0.377 | 0.387 | 0.376 | 0.379 |
| Bulk density/pore vol. ratio | 1.72 | 1.76 | 1.69 | 1.72 | 1.71 |
| BET specific surface area ($m^2$/g) | 278 | 258 | 292 | 280 | 290 |
| Filtering rate (min', sec") | 3'35" | 3'05" | 3'09" | 3'55" | 2'45" |
| Oil retention (%) | 39.4 | 38.5 | 40.1 | 39.8 | 38.0 |
| Oil-absorbing amount (ml/100g) | 61 | 62 | 63 | 62 | 60 |
| Decoloring test | 56.7 | 55.0 | 56.5 | 58.9 | 56.1 |

Table 1 (Continued)

|  | Example 6 | Example 7 | Example 8 | Example 9 |
|---|---|---|---|---|
| Particle size distribution<br>Ave. ptcl. dia. ($D_{50}$, μm)<br>5μm or smaller (vol. %) | 27.3<br>10.2 | 26.9<br>10.5 | 27.8<br>9.9 | 27.6<br>10.1 |
| Bulk density (g/cc) | 0.672 | 0.676 | 0.687 | 0.687 |
| Pore vol. (cc/g) | 0.361 | 0.387 | 0.367 | 0.365 |
| Bulk density/pore vol. ratio | 1.86 | 1.75 | 1.87 | 1.88 |
| BET specific surface area ($m^2$/g) | 291 | 273 | 274 | 243 |
| Filtering rate (min', sec") | 2'50" | 2'55" | 2'41" | 2'54" |
| Oil retention (%) | 38.2 | 38.5 | 38.0 | 38.2 |
| Oil-absorbing amount (ml/100g) | 60 | 62 | 60 | 60 |
| Decoloring test | 56.1 | 55.6 | 57.8 | 58.4 |

Table 2

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Particle size distribution | | | | | | |
| Ave. ptcl. dia. ($D_{50}$, $\mu$m) | 25.8 | 30.1 | 32.6 | 25.4 | 24 | 27.0 |
| 5$\mu$m or smaller (vol. %) | 13.3 | 11.8 | 13.9 | 16.3 | 16.0 | 11.5 |
| Bulk density (g/cc) | 0.558 | 0.688 | 0.731 | 0.567 | 0.557 | 0.720 |
| Pore vol. (cc/g) | 0.417 | 0.271 | 0.333 | 0.460 | 0.416 | 0.346 |
| Bulk density/pore vol. ratio | 1.34 | 2.54 | 2.20 | 1.23 | 1.34 | 2.08 |
| BET specific surface area ($m^2$/g) | 325 | 283 | 285 | 315 | 270 | 242 |
| Filtering rate (min', sec") | 4'02" | 3'49" | 4'49" | 7'25" | 7'30" | 3'15" |
| Oil retention (%) | 41.4 | 37.6 | 38.3 | 43.2 | 42.5 | 38.2 |
| Oil-absorbing amount (ml/ 100g) | 67 | 55 | 56 | 72 | 69 | 57 |
| Decoloring test | 56.1 | 27.0 | 34.7 | 62.8 | 61.7 | 41.3 |

**Claims**

1. A decoloring agent for fats and oils or mineral oils, comprising an activated clay obtainable by treating a dioctahedral smectite clay mineral with an acid, wherein said activated clay has an average particle diameter ($D_{50}$) of 20 to 30 $\mu$ m calculated as volume relying upon a laser diffraction scattering method and contains fine particles of not larger than 5 $\mu$ m in an amount of not larger than 15% by volume, has a bulk density in a range of 0.60 to 0.70 g/cc, has a pore volume at pore diameters of 17 to 3,000 Å of 0.35 to 0.40 cc/g as measured relying upon the nitrogen adsorption method, and has a ratio of said bulk density and said pore volume (bulk density/pore volume) in a range of 1.55 to 1.95.

2. The decoloring agent according to claim 1, wherein said activated clay has a BET specific surface area of 200 to 300 $m^2$/g.

3. A method of producing a decoloring agent according to either claim 1 or claim 2, which method comprises:

   pulverizing and classifying a dioctahedral smectite clay mineral to prepare a powder thereof having an average particle diameter ($D_{50}$) in a range of 20 to 30 $\mu$ m calculated as volume relying upon a laser diffraction scattering method;
   treating said powder with an acid by using an aqueous solution of sulfuric acid of a concentration of 35 to 45% by weight, by adding and mixing said powder to said aqueous solution of sulfuric acid, and heating the mixture thereof at a temperature of not lower than 85°C wherein the treatment with acid is conducted for a time of 1 to 3 hours; and
   washing the obtained acid-treated product followed by drying.

4. The method of producing a decoloring agent according to claim 3, wherein a particle size of said powder is so adjusted as to contain fine particles of not larger than 5 $\mu$m in an amount of not larger than 15% by volume prior to being treated with the acid or after having been treated with the acid.

5. A method of producing a decoloring agent according to either claim 1 or claim 2, which method comprises:

   pulverizing and classifying a dioctahedral smectite clay mineral to prepare a powder thereof having an average particle diameter ($D_{50}$) in a range of 20 to 30 $\mu$ m calculated as volume relying upon a laser diffraction scattering method;
   dipping said powder in an aqueous solution of sulfuric acid of a concentration of 30 to 45% by weight, so that said powder is impregnated with the aqueous solution of sulfuric acid;

conducting the filtering to obtain a filtered cake containing sulfuric acid and water;
heating said filtered cake at a temperature of 80 to 150°C in a state of holding water therein to thereby conduct an acid-treatment; and
washing the obtained acid-treated product followed by drying.

6. The method of producing a decoloring agent according to claim 5, wherein a particle size of said powder is so adjusted as to contain fine particles of not larger than 5 $\mu$m in an amount of not larger than 15% by volume prior to conducting the acid-treatment or after conducting the acid-treatment.

**Patentansprüche**

1. Entfärbungsmittel für Fette und Öle oder Mineralöle, umfassend einen aktivierten Ton, der durch Behandeln eines dioktaedrischen, smektischen Tonminerals mit einer Säure erhalten wird, wobei der aktivierte Ton einen Durchschnittsteilchendurchmesser ($D_{50}$) von 20 bis 30 $\mu$m hat, berechnet als ein Volumen auf Basis eines Laserdiffraktionsstreuungsverfahrens, und feine Teilchen von nicht mehr als 5 $\mu$m in einer Menge von nicht mehr als 15 Vol.-% enthält, eine Schüttdichte in einem Bereich von 0,60 bis 0,70 g/cc hat, ein Porenvolumen bei Porendurchmessern von 17 bis 3000 Å von 0,35 bis 0,40 cc/g hat, gemessen auf Basis des Stickstoffadsorptionsverfahrens, und ein Verhältnis der Schüttdichte und des Porenvolumens (Schüttdichte/Porenvolumen) in einem Bereich von 1,55 bis 1,95 hat.

2. Entfärbungsmittel nach Anspruch 1, wobei der aktivierte Ton eine spezifische BET-Fläche von 200 bis 300 m$^2$/g hat.

3. Verfahren eines Herstellens eines Entfärbungsmittels nach Anspruch 1 oder Anspruch 2, wobei das Verfahren Folgendes umfasst:

   Pulverisieren und Klassifizieren eines dioktaedrischen, smektischen Tonminerals, um ein Pulver daraus herzustellen, das einen Durchschnittsteilchendurchmesser ($D_{50}$) in einem Bereich von 20 bis 30 $\mu$m hat, berechnet als ein Volumen auf Basis eines Laserdiffraktionsstreuungsverfahrens;
   Behandeln des Pulvers mit einer Säure durch Verwenden einer wässrigen Lösung von Schwefelsäure einer Konzentration von 35 bis 45 Gew.-%, durch Hinzufügen und Mischen des Pulvers zu/mit der wässrigen Lösung von Schwefelsäure und Erwärmen der Mischung daraus bei einer Temperatur von nicht weniger als 85 °C, wobei die Behandlung mit Säure für einen Zeitraum von 1 bis 3 Stunden durchgeführt wird; und
   Waschen des erhaltenen säurebehandelten Produkts, gefolgt von Trocknen.

4. Verfahren eines Herstellens eines Entfärbungsmittels nach Anspruch 3, wobei eine Teilchengröße des Pulvers so angepasst ist, dass es feine Teilchen von nicht mehr als 5 $\mu$m in einer Menge von nicht mehr als 15 Vol.-% zu enthält, bevor es mit der Säure behandelt wird oder nachdem es mit der Säure behandelt wurde.

5. Verfahren eines Herstellens eines Entfärbungsmittels nach Anspruch 1 oder Anspruch 2, wobei das Verfahren Folgendes umfasst:

   Pulverisieren und Klassifizieren eines dioktaedrischen, smektischen Tonminerals, um ein Pulver daraus herzustellen, das einen Durchschnittsteilchendurchmesser ($D_{50}$) in einem Bereich von 20 bis 30 $\mu$m hat, berechnet als ein Volumen auf Basis eines Laserdiffraktionsstreuungsverfahrens;
   Eintauchen des Pulvers in eine wässrige Lösung von Schwefelsäure in einer Konzentration von 30 bis 45 Gew.-%, sodass das Pulver mit der wässrigen Lösung von Schwefelsäure imprägniert ist;
   Durchführen des Filterns, um einen Filterkuchen zu erhalten, der Schwefelsäure und Wasser enthält;
   Erwärmen des Filterkuchens bei einer Temperatur von 80 bis 150 °C in einem Zustand, in dem Wasser darin gehalten wird, um dadurch eine Säurebehandlung durchzuführen; und
   Waschen des erhaltenen säurebehandelten Produkts, gefolgt von Trocknen.

6. Verfahren eines Herstellens eines Entfärbungsmittels nach Anspruch 5, wobei eine Teilchengröße des Pulvers so angepasst ist, dass es feine Teilchen von nicht mehr als 5 $\mu$m in einer Menge von nicht mehr als 15 Vol.-% enthält, bevor die Säurebehandlung durchgeführt wird oder nachdem die Säurebehandlung durchgeführt wurde.

**Revendications**

1. Agent de décoloration pour graisses et huiles ou huiles minérales, comprenant une argile activée pouvant être obtenue par traitement d'un minéral d'argile de smectite de type dioctahèdre avec un acide, dans lequel ladite argile activée présente un diamètre particulaire moyen ($D_{50}$) de 20 à 30 $\mu$m calculé en tant que volume en fonction d'un procédé de diffusion par diffraction laser et contient de fines particules pas plus grandes que 5 $\mu$m dans une quantité pas plus grande que 15 % en volume et présente une densité apparente située dans une plage de 0,60 à 0,70 g/cc, présente un volume poreux à des diamètres de pore de 17 à 3,000 Å de 0,35 à 0,40 cc/g tels que mesurés en se fondant sur le procédé d'adsorption d'azote, et présente un rapport de ladite densité apparente et dudit volume poreux (densité apparente/volume poreux) se situant dans une plage de 1,55 à 1,95.

2. Agent de décoloration selon la revendication 1, dans lequel ladite argile activée présente une superficie spécifique BET de 200 à 300 m$^2$/g.

3. Procédé de production d'un agent de décoloration selon soit la revendication 1 soit la revendication 2, lequel procédé comprend :

   la pulvérisation et la classification d'un minéral d'argile de smectite de type dioctahèdre pour préparer une poudre de celui-ci présentant un diamètre particulaire moyen ($D_{50}$) situé dans une plage de 20 à 30 $\mu$m calculé en tant que volume en se fondant sur un procédé de diffusion par diffraction laser ;
   le traitement de ladite poudre par un acide au moyen d'une solution aqueuse d'acide sulfurique d'une concentration allant de 35 à 45 % en poids, en ajoutant et mélangeant ladite poudre à ladite solution aqueuse d'acide sulfurique, et le chauffage du mélange de ceci à une température pas inférieure à 85 °C, le traitement par acide étant effectué pendant une durée de 1 à 3 heures ; et
   le lavage du produit obtenu traité par l'acide suivi du séchage.

4. Procédé de production d'un agent de décoloration selon la revendication 3, dans lequel une taille de particule de ladite poudre est ajustée de manière à contenir de fines particules pas plus grandes que 5 $\mu$m dans une quantité pas plus grande que 15 % en volume avant d'être traité par l'acide ou après avoir été traité par l'acide.

5. Procédé de production d'un agent de décoloration selon soit la revendication 1 soit la revendication 2, lequel procédé comprend :

   la pulvérisation et la classification d'un minéral d'argile de smectite de type dioctahèdre pour préparer une poudre de celui-ci présentant un diamètre particulaire moyen ($D_{50}$) situé dans une plage de 20 à 30 $\mu$m calculé en tant que volume en se fondant sur un procédé de diffusion par diffraction laser ;
   le trempage de ladite poudre dans une solution aqueuse d'acide sulfurique d'une concentration de 30 à 45% en poids, de manière que ladite poudre est imprégnée de la solution aqueuse d'acide sulfurique ;
   la réalisation du filtrage pour obtenir un gâteau filtré contenant de l'acide sulfurique et de l'eau ;
   le chauffage dudit gâteau filtré à une température de 80 à 150 °C tout en retenant l'eau à l'intérieur pour ainsi mener un traitement par acide ; et
   le lavage du produit obtenu traité par l'acide suivi du séchage.

6. Procédé de production d'un agent de décoloration selon la revendication 5, dans lequel une taille de particule de ladite poudre est ajustée de manière à contenir de fines particules pas plus grandes que 5 $\mu$m dans une quantité pas plus grande que 15 % en volume avant la réalisation du traitement par l'acide ou après la réalisation du traitement par l'acide.

# Fig. 1

**REFERENCES CITED IN THE DESCRIPTION**

**Patent documents cited in the description**

- JP 11157829 A
- JP 6340413 A
- JP 4511208 B

- US 20030027950 A1
- EP 1120379 A1

**Non-patent literature cited in the description**

- *Chemistry and Industries,* 1951, vol. 4, 126